# FASCICULE DE BREVET EUROPEEN

(11) **EP 2 101 259 B1**
(45) Date de publication et mention de la délivrance du brevet: **15.05.2019**
(21) Numéro de dépôt: 09290167.7
(22) Date de dépôt: 09.03.2009
(51) Int. Cl.: G06F 9/54, H04L 12/801

(54) **Système de routage de données**
Datenroutingsystem
Data routing system

(30) Priorité: 13.03.2008 FR 0801379
(43) Date de publication de la demande: 16.09.2009
(73) Titulaire: MBDA France, 75016 Paris (FR)
(72) Inventeur: Rachet, Alain, 78990 Elancourt (FR); Katz, Olivier, 91640 Fontenay les Briis (FR); Lemaitre, Frédéric, 78340 Le Mesnil Saint Denis (FR); Frances, Henri, 91620 Nozay (FR)
(74) Mandataire: Gevers & Orès

(56) Documents cités:
- EP-A- 1 770 541
- WO-A-2005/091574
- FR-A- 2 842 922
- US-A1- 2004 017 820
- ALEX KRASNOV ET AL: "RAMP Blue: A Message-Passing Manycore System in FPGAs" FIELD PROGRAMMABLE LOGIC AND APPLICATIONS, 2007. FPL 2007. INTERNATION AL CONFERENCE ON, IEEE, PI, 1 août 2007 (2007-08-01), pages 54-61, XP031159048 ISBN: 978-1-4244-1059-0
- MARESCAUXT ET AL: "Interconnection Networks Enable Fine-Grain Dynamic Multi-Tasking on FPGAs" LECTURE NOTES IN COMPUTER SCIENCE, SPRINGER VERLAG, BERLIN; DE, vol. 2438, 1 septembre 2002 (2002-09-01), pages 795-805, XP002319857
- DALLY W J ET AL: "Route packets, not wires: on-chip interconnection networks" PROCEEDINGS OF THE 38TH. ANNUAL DESIGN AUTOMATION CONFERENCE. (DAC). LAS VEGAS, NV, JUNE 18 - 22, 2001; [PROCEEDINGS OF THE DESIGN AUTOMATION CONFERENCE], NEW YORK, NY : ACM, US, vol. CONF. 38, 18 juin 2001 (2001-06-18), pages 684-689, XP010552473 ISBN: 978-1-58113-297-7

## Description

La présente invention concerne un système de routage de données permettant l'échange de données entre plusieurs calculateurs électroniques par l'intermédiaire de liens de communication.

Quoique non exclusivement, le système de routage conforme à la présente invention est particulièrement bien adapté pour fonctionner dans un environnement temps réel.

On sait que, dans un tel environnement, pour échanger des données entre les différents calculateurs d'un même système de routage disposant de liens de communication de nature hétérogène (c'est-à-dire ayant des standards électriques et des protocoles de communication associés différents), on intègre au sein de calculateurs appropriés du système un processeur dédié et son application associée. Chaque processeur dédié traite alors les entrées/sorties du calculateur dans lequel il est intégré et peut plus particulièrement réaliser une adaptation en protocoles des données échangées.

Cependant, l'ajout d'un processeur dans un calculateur accroît sensiblement le volume de ce dernier, ce qui peut devenir contraignant, par exemple lorsqu'un encombrement réduit est exigé. En outre, le coût d'un tel processeur et de son intégration dans le calculateur, ainsi que le coût de développement de l'application logicielle associée, augmentent considérablement le prix final du calculateur. De plus, le processeur en fonctionnement dissipe, au sein du calculateur, une puissance thermique supplémentaire qui peut nécessiter, le cas échéant, l'intégration d'un système de refroidissement complémentaire (par exemple un ventilateur) dans le calculateur. Le débit de transmission de données accessible par les entrées/sorties du calculateur est également limité par le délai de traitement des données non négligeable par l'application logicielle associée au processeur.

ALEX KRASNOV ET AL: "RAMP Blue: A Message-Passing Manycore System in FPGAs", FIELD PROGRAMMABLE LOGIC AND APPLICATIONS, 2007. FPL 2007. INTERNATIONAL CONFERENCE ON, IEEE, PI, 01 août 2007, pages 54-61, ISBN: 978-1-4244-1059-0 décrit un système permettant d'émuler une architecture multi-coeur sur un ensemble grappe de plusieurs cartes électroniques BEE2, chaque carte incluant un calculateur principal "control FPGA" et quatre calculateurs secondaires "user FPGA". Dans D1, un calculateur secondaire "user FPGA" communique avec un autre circuit FPGA situé soit sur la même carte BEE2 soit sur une autre carte BEE2 en utilisant des protocoles de communication différents, respectivement LVCMOS et XAUI. Enfin, chaque circuit "user FPGA" de D1 comporte des mémoires tampons ainsi qu'une matrice d'interconnexion utilisée pour effectuer l'adaptation en protocol des messages et leur transfert vers les autres circuits FPGA.

La présente invention a donc pour objet de remédier à ces inconvénients.

A cette fin, selon l'invention, le système de routage de données comportant au moins un ensemble de transmission comprenant un calculateur principal, comportant des circuits logiques et apte à piloter un processus industriel, au moins un routeur et au moins deux calculateurs secondaires connectés audit calculateur principal qui les commande, par l'intermédiaire de liens de communication, un protocole d'échange de données étant associé à chacun desdits liens de communication, caractérisé en ce que:
- ledit routeur est piloté par ledit calculateur principal ;
- en ce que ledit routeur comporte des ports de communication interconnectés par l'intermédiaire d'au moins une matrice d'interconnexion apte à assurer une diffusion automatique des données provenant d'un port de communication vers plusieurs autres ports de communication qui lui sont connectés ;
- en ce que ladite matrice d'interconnexion exploite au moins une partie des circuits logiques dudit calculateur principal ; et
- en ce que lesdits ports de communication comportent des moyens d'adaptation des protocoles qui permettent la mise en concordance d'un format de messages provenant d'un lien de communication avec un format de messages consommé par la matrice d'interconnexion,
ledit routeur étant ainsi apte à effectuer le transfert et l'adaptation en protocoles des données entre ledit calculateur principal et lesdits calculateurs secondaires, notamment lorsque lesdits liens de communication sont de nature hétérogène.

Ainsi, les routeurs des ensembles de transmission, par exemple intégrés dans les calculateurs principaux, utilisent une partie des ressources logiques (c'est-à-dire des portes logiques des circuits logiques) de ces calculateurs pour réaliser la gestion du transfert des données au niveau de leurs entrées/sorties. Le système de routage de l'invention fonctionne par conséquent sans intervention du ou des processeurs des calculateurs principaux, hormis lors de l'initialisation du système (bien qu'une initialisation purement matérielle soit envisageable), et indépendamment de l'application logicielle associée à chacun des processeurs des calculateurs principaux et secondaires.

En outre, puisque le transfert et l'adaptation en protocoles des données sont réalisés par des fonctions logiques câblées au sein des circuits logiques des calculateurs principaux et qu'aucune application logicielle supplémentaire associée à un processeur n'est nécessaire, le délai de traitement des données au sein des routeurs est négligeable (au plus quelques µs).

Par ailleurs, comme aucun processeur supplémentaire n'est intégré dans les calculateurs principaux, ces derniers ne subissent pas d'augmentation de volume et aucun dispositif de refroidissement n'est nécessaire.

De préférence, le système de routage comprend au moins deux tels ensembles de transmission, dont les calculateurs principaux sont interconnectés par l'intermédiaire d'un lien de communication série haut-débit, de sorte que le calculateur principal d'un desdits ensembles de transmission est apte à observer et commander les calculateurs principal et secondaires de l'autre ensemble.

Ainsi, un calculateur principal d'un ensemble de transmission peut piloter simultanément à distance les calculateurs principaux d'autres ensembles de transmission, ainsi que leurs calculateurs secondaires associés, lorsqu'ils sont connectés les uns aux autres par l'intermédiaire du lien de communication haut-débit.

En outre, ledit calculateur principal d'un tel ensemble de transmission est également connecté, par l'intermédiaire d'un lien de communication série haut-débit, à des moyens de test et d'analyse permettant notamment la mise au point et le contrôle desdits calculateurs principaux et secondaires de chacun des ensembles de transmission dudit système.

Avantageusement, le débit dudit lien de communication série haut-débit est supérieur au débit cumulé desdits liens de communication.

De préférence, ledit lien de communication série haut-débit est le bus Ethernet fonctionnant sous le protocole IP (en anglais « Internet Protocol ».

En effet, le bus Ethernet permet des distances de communication et des débits de transmission satisfaisants pour la plupart des applications embarquées temps réel.

En outre, le routeur de chacun des ensembles de transmission comporte des ports de communication interconnectés au moyen d'une matrice d'interconnexion, ladite matrice étant apte à assurer une diffusion automatique des données provenant d'un port de communication vers plusieurs autres ports de communication qui lui sont connectés. Une telle diffusion est également désignée multidiffusion.

Ainsi, plusieurs calculateurs destinataires du système de routage peuvent recevoir des données semblables provenant d'un même calculateur source.

Par ailleurs, au moins un desdits ports de communication dudit routeur comprend un contrôleur DMA (pour en anglais « Direct Access Memory ») d'accès direct à la mémoire en émission et un contrôleur DMA en réception.

Ainsi, grâce aux DMA de ces ports de communication, le transfert d'un message de données nécessite au plus une écriture en émission (armement du DMA d'émission) et une lecture en réception (lecture du sémaphore de réception) de la part du processeur du calculateur principal comportant le routeur.

De plus, chaque port de communication dudit routeur comprend de tels moyens d'adaptation des protocoles qui permettent d'assurer la cohérence des protocoles associés aux données échangées entre lesdits calculateurs de chacun des ensembles de transmission.

Ainsi, un mécanisme d'encapsulation/décapsulation des données peut par exemple être mis en oeuvre par les moyens d'adaptation des protocoles pour effectuer une telle adaptation.

De plus, les données se présentant sous la forme de messages de données, chacun desdits ports de communication dudit routeur comprend des moyens de filtrage des adresses associées auxdits messages de données de sorte que ledit port transfère, sur le lien de communication qui lui est connecté, uniquement les messages possédant une adresse filtrée par lesdits moyens de filtrage.

Ainsi, grâce à la matrice d'interconnexion (qui assure une multidiffusion des messages) et au principe de filtrage des adresses des moyens de filtrage, un message peut être envoyé sans action de la source (autre qu'un choix adapté d'adresses vers un ou plusieurs destinataires), ce qui supprime au moins une partie de la charge logicielle liée au transfert des données.

Par ailleurs, lesdits ports de communication dudit routeur comprennent des moyens de datation des données traversant lesdits ports.

Ainsi, la datation des messages circulant dans le système de routage permet de contribuer à la mise au point du système de routage, notamment par l'intermédiaire des moyens de test et d'analyse.

Avantageusement, lesdits circuits logiques du calculateur principal de chacun des ensembles de transmission sont des circuits logiques programmables de type FPGA (pour en anglais « Field Programmable Gâte Arrays »).

En effet, les fonctions câblées logiques du routeur sont facilement intégrables dans les circuits logiques FPGA récents qui offrent toutes des interfaces Mac Ethernet.

De préférence, le système de routage fonctionne dans un environnement de traitement de données temps réel.

Les figures du dessin annexé feront bien comprendre comment l'invention peut être réalisée. Sur ces figures, des références identiques désignent des éléments semblables.
La figure 1 représente schématiquement un exemple de réalisation particulier du système de routage de données conforme à la présente invention.
La figure 2 illustre schématiquement l'architecture d'un des routeurs de données hétérogènes mis en oeuvre dans un des calculateurs principaux du système de routage de l'invention représenté sur la figure 1.
La figure 3 présente schématiquement l'architecture générique d'un port de communication utilisé par l'invention et intégré au routeur hétérogène de la figure 2 précitée.

Le système de routage de données conforme à la présente invention permet l'acheminement de données d'une source vers un ou plusieurs destinataires, par l'intermédiaire de liens de communication numériques. Ce système de routage fonctionne de préférence dans un environnement temps réel contraint de traitement de données.

Dans un exemple de réalisation particulier conforme à la présente invention, les données sont échangées dans le système de routage sous la forme de messages (c'est-à-dire des blocs de données disposant d'un identifiant de début et d'un identifiant de fin). La structure de chaque message est conforme au protocole associé au lien de communication par lequel transite le message depuis la source vers le ou les destinataires.

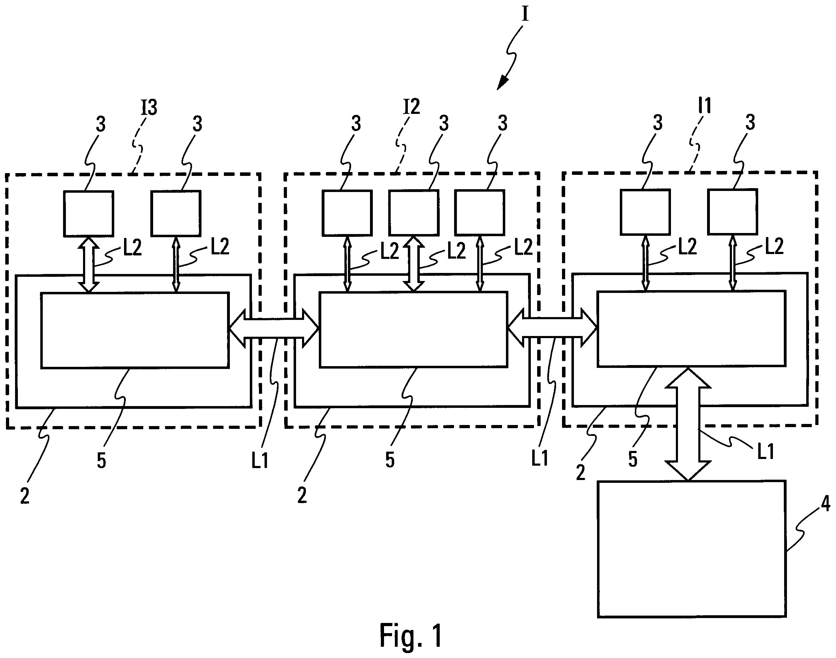

Comme le montre la figure 1, le système de routage I conforme à l'invention comprend :
- des ensembles de transmission I1, I2, I3 qui comportent chacun :
   - un calculateur principal 2, apte à piloter un processus (par exemple technique, industriel, etc...), connectés les uns aux autres par l'intermédiaire d'un lien de communication série haut-débit L1 (désigné bus principal) reposant sur un principe de connexion point-à-point ;
   - un routeur hétérogène 5 permettant le transfert et l'adaptation en protocoles des données au sein du système de routage I ;
   - des calculateurs secondaires 3 (par exemple des actionneurs, des capteurs, des enregistreurs, etc ...) connectés au calculateur principal au moyen de liens de communication numériques L2 (désignés bus secondaires) de nature hétérogène, le calculateur principal 2 commandant lesdits calculateurs secondaires 3 ;
- des moyens de test et d'analyse 4 du système de routage I connectés au calculateur principal 2 d'un ensemble de transmission I1, I2, I3 par l'intermédiaire du bus principal L1. Ces moyens de test et d'analyse 4 permettent notamment d'observer et de paramétrer le système de routage I, ainsi que de contrôler à distance les calculateurs principaux 2 et secondaires 3.

Il est à noter que chacun des calculateurs principaux 2 et secondaires 3 peut être une source ou un destinataire de messages de données. Dans le système de routage I conforme à l'invention, on peut transmettre des données d'une source à un ou plusieurs destinataires même si :
- les destinataires sont connectés à des liens de communication de nature différente de celle du lien auquel est connectée la source ;
- les destinataires sont localisés à des distances de transmission incompatibles de l'emplacement de la source.

Dans l'exemple de réalisation, le bus principal L1 est avantageusement le bus Ethernet (par exemple en 100 Mb/s ou 1000 Mb/s) fonctionnant sous le protocole IP qui permet le routage des données. Le bus Ethernet autorise des distances de transmission et des débits de transfert satisfaisant à la plupart des explications embarquées temps réel. Le bus principal L1 possède de préférence un débit de transfert supérieur au débit réel cumulé de l'ensemble des bus secondaires L2 de nature hétérogène de manière à assurer une transmission temps réel sans perte de messages.

II est à noter que lors d'échanges de données sur les bus secondaires L2, chaque groupe de messages de données destiné à un même groupe de destinataires possède un identifiant propre. Si le bus secondaire L2 est très simple (par exemple le bus connu de la technique sous la dénomination RS422 sans protocole de communication particulier associé), il n'y a qu'un destinataire ou groupe de destinataires dont le point commun est le lien de communication physique lui-même (c'est-à-dire que tous les messages échangés sur ce lien seront routés de façon semblable). Si le bus secondaire L2 est plus élaboré (c'est alors un système à plusieurs données), le protocole associé dispose naturellement au minimum d'un identifiant unique (voire d'information de routage) par message.

Dans un mode de réalisation préféré conforme à l'invention, un routeur hétérogène 5 est intégré dans chacun des calculateurs principaux 2. Toutefois, on peut envisager dans une variante d'intégrer plusieurs routeurs dans un même calculateur principal.

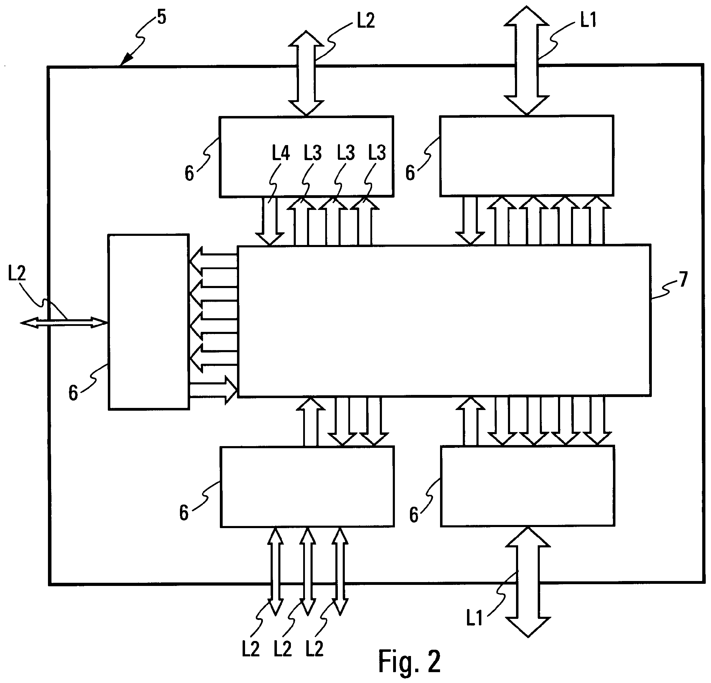

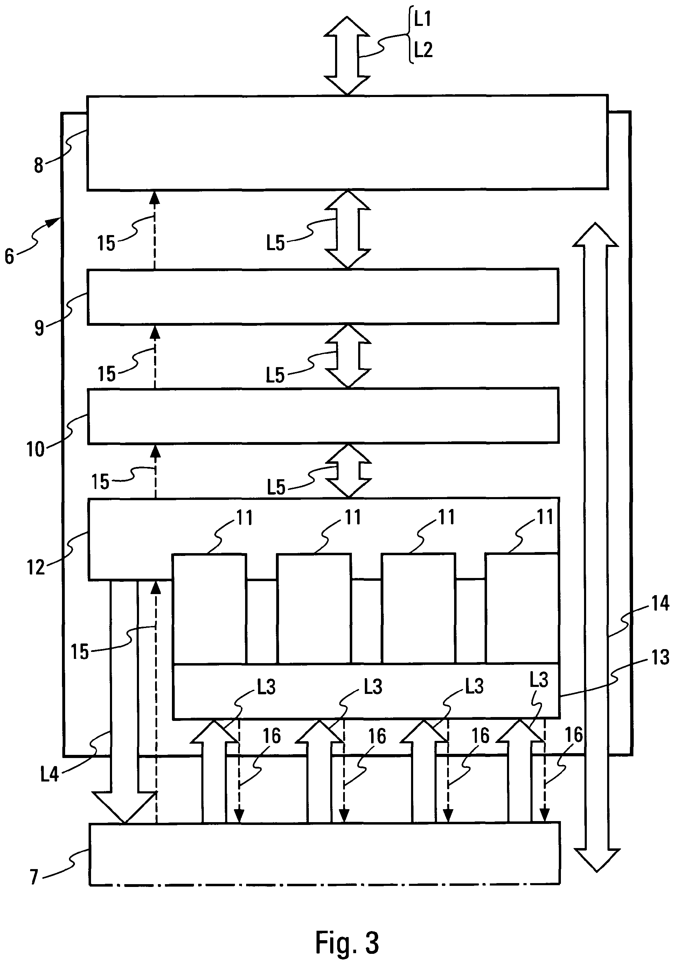

Comme le montre la figure 2, les routeurs 5 comprennent des ports de communication 6 (décrits par la suite en relation avec la figure 3), servant d'interface de connexion aux bus principal L1 et secondaires L2, et une matrice d'interconnexion 7. Il est à noter que les ports 6 connectés au bus principal L1 sont des ports de chaînage permettant d'assurer la connexion point à point du bus principal L1.

Selon l'invention, chaque matrice d'interconnexion 7 est avantageusement réalisée, au moins en partie, au moyen des circuits logiques programmables (par exemple de types FPGA ou ASIC (pour en anglais « Application Specific Integrated Circuit »)) appartenant au calculateur principal 2 comprenant ladite matrice 7. Elle est déterminée lors de la réalisation de l'architecture du système de routage I. A cette fin, une interconnexion matérielle des différents ports de communication 6 est tout d'abord réalisée pour que les ports de communication susceptibles de s'échanger des données soient interconnectés physiquement les uns avec les autres. Comme le montre la figure 2, les flèches L3 symbolisent les interconnexions matérielles par lesquelles chaque port de communication peut recevoir des messages en provenance des autres ports de communication qui lui sont connectés. La flèche L4 symbolise quant à elle l'interconnexion matérielle par laquelle chaque port peut transférer des messages de données à la matrice d'interconnexion 11.

Ensuite, un paramétrage logiciel de la matrice 7 est effectué pour rendre effective au moins une partie des interconnexions matérielles réalisées. Il est à noter que, si l'interconnexion matérielle des ports de communication n'est pas modifiable une fois réalisée, le paramétrage logiciel de la matrice d'interconnexion 7 peut quant à lui être actualisé selon les évolutions du système de routage I.

Ainsi, chaque matrice d'interconnexion 7 assure :
- une diffusion automatique des messages provenant de chacun des ports de communication du routeur 5 vers les autres ports de communication interconnectés à ce port de manière à être reçus par plusieurs calculateurs destinataires (multidiffusion) ;
- une partie de la régulation du trafic des messages en émettant vers les ports dits « intelligents » (par exemple les ports processeurs, décrits par la suite) des commandes d'arrêt de transmission (symbolisées par les flèches 15 en pointillés sur la figure 3 décrite ultérieurement) en cas d'engorgement des ports de communication du routeur 5 (les ports processeurs émettant préalablement des messages de congestion symbolisés par les flèches 16 en pointillés sur la figure 3).

Tel qu'illustré sur la figure 3, l'architecture simplifiée d'un port de communication 6 comprend notamment :
- des moyens de connexion 8 qui réalisent une interface directe avec le lien de communication (bus principal L1 ou secondaire L2) connecté audit port. Cette interface directe est assurée par un élément d'interface (connu de la technique sous la dénomination PHY ou driver de ligne selon sa complexité). Les moyens de connexion 8 permettent également un contrôle des couches protocolaires associées au lien de communication. Un tel contrôle (par exemple le calcul des coefficients CRC (pour en anglais « Cyclic Redundancy Check »), la gestion des erreurs bas niveau, etc ...) est par conséquent propre à chaque lien de communication ;
- des moyens d'adaptation des protocoles 9 qui permettent la mise en concordance du format des messages provenant du lien de communication avec le format des messages consommés par la matrice d'interconnexion 7. Ainsi, le format des messages échangés entre le port de communication 6 et la matrice d'interconnexion 7 est le même que le message soit entrant ou sortant. Dans l'exemple de réalisation de l'invention, le format des messages consommés et délivrés par la matrice 7 est de type IP/UDP (pour en anglais « User Datagram Protocol »). Une telle adaptation des protocoles peut être mise en oeuvre par une technique d'encapsulation/décapsulation des données ;
- des moyens de datation des messages 10 mis en oeuvre optionnelle-ment ;
- des moyens de stockage temporaire 11 (par exemple des mémoires tampon) des messages entrants et sortants du port de communication. Une gestion des mémoires tampon 11 permet notamment de gérer les collisions potentielles des messages échangés ;
- des moyens de gestion de la priorité 12 des mémoires tampon 11 ; et
- des moyens de filtrage 13 des adresses, associées aux messages échangés, de manière à gérer la diffusion des messages sur les liens de communication du système de routage I. Ainsi, les moyens de filtrage 13 combinés à la matrice d'interconnexion 7 permettent à une source d'envoyer un message à destination de plusieurs destinataires donnés, sans action de la source autre qu'un choix adapté des adresses de ces destinataires.

Comme le montre la figure 3, les flèches L5 symbolisent les transferts de données entre les différents moyens précités du port de communication 6.

En outre, l'architecture d'un port de communication comprend également les moyens suivants (non représentés sur la figure 3) :
- des moyens de transfert des messages vers et depuis la mémoire du processeur du calculateur principal 2 connecté à la matrice d'interconnexion 7 ;
- des moyens de gestion de l'état des mémoires tampon 11 ;
- des moyens de destruction des messages en erreurs ; et
- des moyens de destruction des messages qui ne sont pas destinés au port de communication considéré.

Il est à noter que les ports de communication 6 ont besoin de paramètres pour fonctionner (par exemple la fréquence de fonctionnement du lien de communication connecté, le gap intermessage, etc...). Ces paramètres sont par exemple chargés à la mise sous tension du calculateur principal 2, soit par le processeur du calculateur qui agit alors comme contrôleur du routeur 5 lors de cette phase, soit par une mémoire permanente (par exemple au sein du routeur 5) par l'intermédiaire d'un bus de paramétrisation 14 interne au routeur 5.

En outre, on peut distinguer deux types de ports de communication 6 : les ports bus et les ports processeurs. Les différences entre ces deux types de ports portent essentiellement sur :
- le type de bus supporté. A titre d'exemple, les ports processeurs sont généralement connectés à des bus de types connus de la technique sous la dénomination PCI, PCI ex, Rapidio, PLB, amba, etc ..., alors que les ports bus sont quant à eux habituellement connectés à tous les grands standards de bus série (par exemple RS422) ;
- la présence de contrôleurs DMA d'accès direct à la mémoire dans les ports processeurs. Ces contrôleurs DMA en réception et en émission permettent de recevoir et d'émettre des messages sans intervention dynamique (autre que l'autorisation d'émettre ou d'acquitter les messages entrants) de la part du processeur du calculateur principal 2 comprenant le routeur 5. Un rangement différencié des messages entrants est également effectué par un contrôleur DMA en réception qui doit disposer d'une information supplémentaire sur ces messages (par exemple le processus logiciel cible du processeur). A cette fin, en considérant des messages entrants conformes au protocole IP, on peut choisir la sur-couche protocolaire UDP. Le principe du rangement différencié est alors le suivant :
   - une information de processus conforme au protocole UDP (encore désigné socket UDP) associée à un message entrant est analysée par le DMA en réception puis convertie en une adresse de rangement par l'intermédiaire d'une table de correspondance renseignée, par exemple, par le processeur du calculateur principal 2 lors de son initialisation. Il est à noter que lorsque l'information de processus n'est pas disponible, un processus par défaut, qui correspond à une zone de rangement désignée corbeille, est associé au message entrant considéré ;
   - la zone de rangement correspondant à l'adresse de rangement est protégée par un sémaphore. Lorsque ce sémaphore est désactivé, le message entrant est rangé dans la zone de rangement et le sémaphore est activé. Dans le cas contraire (le sémaphore est déjà activé), le processeur n'a pas lu le message précédent rangé dans la zone de rangement et le message considéré est disposé dans la corbeille, également protégée par un sémaphore. Un tel rangement active un compteur d'erreur ;
   - aucune zone de rangement n'est libre, alors le message entrant est détruit et le compteur d'erreur est incrémenté ;
   Il est à noter que, dans le cas où aucune information sur le processus logiciel cible associé au message n'est disponible, il est envisageable de modifier le contrôleur DMA en réception en utilisant des techniques de mise en mémoire tampon plus complexes (par exemple de type circulaire où le message entré n'est écrasé qu'un nombre de messages donné plus tard) de manière à surcharger le moins possible le processeur du calculateur. Par ailleurs, grâce aux contrôleurs DMA des ports processeurs, le transfert d'un message nécessite au plus une écriture en émission (l'armement du contrôleur DMA d'émission) et une lecture en réception (la lecture du sémaphore de réception), ce qui réduit notablement la charge logicielle liée au transfert de données ;
- le fait que le transfert de données en cours sur les ports processeurs peut toujours être suspendu sans pertes de données, alors que celui en cours sur les ports bus ne peut pas être interrompu (du moins lorsqu'ils sont connectés à la plupart des bus série actuels). On rappelle par ailleurs que les commandes d'arrêt de transmission (symbolisées par les flèches 15 sur la figure 3) et les messages de congestion (symbolisés par les flèches 16) ne sont généralement mis en oeuvre que dans les ports processeurs.

Par ailleurs, on peut modifier l'architecture d'un port de communication 6 pour lui attribuer une fonction essentielle dans l'analyse du fonctionnement temps réel du processeur d'un calculateur principal 2. Un tel port de communication ainsi modifié, désigné par la suite Port de Surveillance Temps Réel ou PTSR, dispose d'une connexion à la matrice d'interconnexion 7 du routeur 5 et d'une connexion (par exemple par un lien de communication très haut débit connu de la technique sous la dénomination PCI) au processeur du calculateur principal 2. Par l'intermédiaire des moyens de datation des messages 10 du port PTSR, les messages provenant du processeur sont datés avec une précision appropriée (par exemple la microseconde) et stockés dans une mémoire de taille adaptée à chaque application gérée par le processeur (par exemple 256 mots de 32 bits). Cette mémoire est périodiquement vidée dans le système de routage I à destination des moyens de test et d'analyse 4, la période dépendant de l'application exécutée par le processeur. Le contrôle de l'émission des messages sur le processeur est propre à chaque application. On peut citer, comme exemple de contrôle, la circulation d'un message particulier, l'utilisation d'une base de temps, le déclenchement d'un compteur de surveillance (désigné « watch dog » en anglais), etc ...

Ainsi, l'analyse des messages provenant du processeur permet, par exemple aux moyens de test et d'analyse 4, de disposer à distance et sans intrusion au sein du calculateur principal 2 d'une image des activités temps réel de ce processeur, de manière notamment à contribuer directement à la mise au point du système de routage I.

En outre, un des ports de communication du routeur 5, désigné port de test, connecté au bus principal L1 peut être dédié à la mise au point et à la validation du système de routage I. Les messages circulant au sein du système de routage I et datés automatiquement par les moyens de datation 10, lors de leur entrée dans le routeur, peuvent être reçus par ce port test sans action des sources (une multidiffusion automatique étant réalisée par les matrices de connexion 7 des différents routeurs 5 du système I) afin de réaliser une analyse des transferts de données dans le système I. Il est cependant possible de choisir les adresses de destination des messages ainsi que les filtres d'adresses des moyens de filtrage 13 du port test de manière à sélectionner les messages les mieux adaptés à la validation du système I.

## Revendications

1. Système de routage de données (I) comportant au moins un ensemble de transmission (I1, I2, I3) comprenant un calculateur principal (2), comportant des circuits logiques et apte à piloter un processus industriel, au moins un routeur (5) et au moins deux calculateurs secondaires (3) connectés audit calculateur principal (2) qui les commande, par l'intermédiaire de liens de communication (L2), un protocole d'échange de données étant associé à chacun desdits liens de communication (L2),
**caractérisé en ce que**:
- ledit routeur (5) est piloté par ledit calculateur principal (2) ;
- ledit routeur (5) comporte des ports de communication (6) interconnectés par l'intermédiaire d'au moins une matrice d'interconnexion (7) apte à assurer une diffusion automatique des données provenant d'un port de communication (6) vers plusieurs autres ports de communication qui lui sont connectés ;
- ladite matrice d'interconnexion exploite au moins une partie des circuits logiques dudit calculateur principal (2) ; et
- lesdits ports de communication (6) comportent des moyens d'adaptation des protocoles (9) qui permettent la mise en concordance d'un format de messages provenant d'un lien de communication (L2) avec un format de messages consommé par la matrice d'interconnexion (7),
ledit routeur étant ainsi apte à effectuer le transfert et l'adaptation en protocoles des données entre ledit calculateur principal (2) et lesdits calculateurs secondaires (3), notamment lorsque lesdits liens de communication (L2) sont de nature hétérogène.

2. Système de routage selon la revendication 1,
**caractérisé en ce qu'**il comprend au moins deux tels ensembles de transmission (I1, I2, I3), dont les calculateurs principaux (2) sont interconnectés par l'intermédiaire d'un lien de communication série haut-débit (L1), de sorte que le calculateur principal (2) d'un desdits ensembles de transmission (I1, I2, I3) soit apte à observer et commander les calculateurs principal et secondaires de l'autre ensemble.

3. Système de routage selon l'une des revendications 1 ou 2, **caractérisé en ce que** ledit calculateur principal (2) d'un tel ensemble de transmission (I1) est en outre connecté, par l'intermédiaire d'un lien de communication série haut-débit (L1), à des moyens de test et d'analyse (4) permettant notamment la mise au point et le contrôle desdits calculateurs principaux (2) et secondaires (3) de chacun des ensembles de transmission (I1, I2, I3) dudit système (I).

4. Système de routage selon l'une des revendications 2 ou 3, **caractérisé en ce que** le débit dudit lien de communication série haut-débit (L1) est supérieur au débit cumulé desdits liens de communication (L2).

5. Système de routage selon l'une des revendications 2 à 4, **caractérisé en ce que** ledit lien de communication série haut-débit (L1) est le bus Ethernet fonctionnant sous le protocole IP.

6. Système de routage selon l'une des revendications 1 à 5, **caractérisé en ce qu'**au moins un desdits ports de communication (6) dudit routeur (5) comprend un contrôleur DMA d'accès direct à la mémoire en émission et un contrôleur DMA en réception.

7. Système de routage selon l'une des revendications 1 à 6, **caractérisé en ce que**, les données se présentant sous la forme de messages de données, chacun desdits ports de communication (6) dudit routeur (5) comprend des moyens de filtrage des adresses (13) associées auxdits messages de données de sorte que ledit port transfère, sur le lien de communication (L2) qui lui est connecté, uniquement les messages possédant une adresse filtrée par lesdits moyens de filtrage (13).

8. Système de routage selon l'une des revendications 1 à 7, **caractérisé en ce que** lesdits ports de communication (6) dudit routeur (5) comprennent des moyens de datation (10) des données traversant lesdits ports.

9. Système de routage selon l'une des revendications 1 à 8, **caractérisé en ce que** lesdits circuits logiques du calculateur principal (2) de chacun des ensembles de transmission (I1, I2, I3) sont des circuits logiques programmables de type FPGA.

10. Système de routage selon l'une des revendications 1 à 8, **caractérisé en ce qu'**il fonctionne dans un environnement de traitement des données temps réel.

## Patentansprüche

1. Datenroutingsystem (I), aufweisend mindestens eine Übermittlungsanordnung (I1, I2, I3), umfassend einen Hauptrechner (2) aufweisend logische Schaltungen und in der Lage, einen industriellen Prozess zu steuern, mindestens einen Router (5) und mindestens zwei Sekundärrechner (3), die mit dem Hauptrechner (2) verbunden sind, der sie über Kommunikationsverbindungen (L2) leitet, wobei jeder der Kommunikationsverbindungen (L2) ein Datenaustauschprotokoll zugeordnet ist,
**dadurch gekennzeichnet, dass**:
- der Router (5) durch den Hauptrechner (2) gesteuert wird;
- der Router (5) Kommunikationsanschlüsse (6) aufweist, die über mindestens eine Vernetzungsmatrix (7) miteinander verbunden sind, die in der Lage ist, eine automatische Verbreitung der Daten sicherzustellen, die von einem Kommunikationsanschluss (6) kommen, hin zu mehreren anderen Kommunikationsanschlüssen, die mit diesem verbunden sind;
- die Vernetzungsmatrix mindestens einen Teil der logischen Schaltungen des Hauptrechners (2) nutzt; und
- die Kommunikationsanschlüsse (6) Mittel zur Anpassung der Protokolle (9) aufweisen, die die Angleichung eines Formats von Nachrichten, die von einer Kommunikationsverbindung (L2) kommen, an ein Nachrichtenformat ermöglichen, das von der Vernetzungsmatrix (7) verwendet wird,
wobei der Router somit in der Lage ist, die Weiterleitung und die Anpassung hinsichtlich der Protokolle der Daten zwischen dem Hauptrechner (2) und den Sekundärrechnern (3) durchzuführen, insbesondere, wenn die Kommunikationsverbindungen (L2) heterogen sind.

2. Routingsystem nach Anspruch 1,
**dadurch gekennzeichnet, dass** es mindestens zwei derartige Übermittlungsanordnungen (I1, I2, I3) umfasst, deren Hauptrechner (2) über eine serielle Breitband-Kommunikationsverbindung (L1) miteinander vernetzt sind, sodass der Hauptrechner (2) einer der Übermittlungsanordnungen (I1, I2, I3) in der Lage ist, die Haupt- und Sekundärrechner der anderen Anordnung zu beobachten und zu leiten.

3. Routingsystem nach einem der Ansprüche 1 oder 2, **dadurch gekennzeichnet, dass** der Hauptrechner (2) einer derartigen Übermittlungsanordnung (I1) weiter über eine serielle Breitband-Kommunikationsverbindung (L1) mit Prüf- und Analysemitteln (4) verbunden ist, was insbesondere die Abstimmung und die Kontrolle der Haupt- (2) und Sekundärrechner (3) jeder der Übermittlungsanordnungen (I1, I2, I3) des Systems (I) ermöglicht.

4. Routingsystem nach einem der Ansprüche 2 oder 3, **dadurch gekennzeichnet, dass** die Übertragungsgeschwindigkeit der seriellen Breitband-Kommunikationsverbindung (L1) höher als die kumulative Übertragungsgeschwindigkeit der Kommunikationsverbindungen (L2) ist.

5. Routingsystem nach einem der Ansprüche 2 bis 4, **dadurch gekennzeichnet, dass** die serielle Breitband-Kommunikationsverbindung (L1) der Ethernet-Bus ist, der mit dem IP-Protokoll arbeitet.

6. Routingsystem nach einem der Ansprüche 1 bis 5, **dadurch gekennzeichnet, dass** mindestens einer der Kommunikationsanschlüsse (6) des Routers (5) einen DMA-Controller mit direktem Zugriff auf den Speicher beim Sendevorgang und einen DMA-Controller beim Empfangsvorgang umfasst.

7. Routingsystem nach einem der Ansprüche 1 bis 6, **dadurch gekennzeichnet, dass** die Daten in Form von Datennachrichten vorliegen, wobei jeder der Kommunikationsanschlüsse (6) des Routers (5) Mittel zur Filterung der Adressen (13) umfasst, die mit den Datennachrichten verknüpft sind, sodass der Anschluss über die Kommunikationsverbindung (L2), die mit ihm verbunden ist, nur die Nachrichten weiterleitet, die eine Adresse besitzen, die durch die Mittel zur Filterung (13) gefiltert wurde.

8. Routingsystem nach einem der Ansprüche 1 bis 7, **dadurch gekennzeichnet, dass** die Kommunikationsanschlüsse (6) des Routers (5) Mittel zur Datierung (10) der Daten umfassen, die die Anschlüsse passieren.

9. Routingsystem nach einem der Ansprüche 1 bis 8, **dadurch gekennzeichnet, dass** die logischen Schaltungen des Hauptrechners (2) von jeder der Übermittlungsanordnungen (I1, I2, I3) programmierbare logische Schaltungen vom Typ FPGA sind.

10. Routingsystem nach einem der Ansprüche 1 bis 8, **dadurch gekennzeichnet, dass** es in einer Echtzeit-Datenverarbeitungsumgebung arbeitet.

## Claims

1. Data routing system (I) comprising at least one transmission assembly (I1, 12, 13) including a primary calculator (2) comprising logic circuits and being adapted to pilot an industrial process, at least one router (5) and at least two secondary calculators (3) connected to said primary calculator (2) which controls them through communication links (L2), a data exchange protocol being associated with each of said communication links (L2),
**characterized in that**:
- said router (5) is piloted by said primary calculator (2);
- said router (5) comprises communication ports (6) interconnected through at least an interconnection matrix (7) adapted to perform an automatic diffusion of data from a communication port (6) to several other communication ports which are connected to it;
- said interconnection matrix uses at least one part of the logic circuits of said primary calculator (2); and
- said communication ports (6) comprise protocol adaptation (9) means which allow a format of messages from a communication link (L2) to be in accordance with a format of messages consumed by the interconnection matrix (7),
said router then being able to provide the transfer and the data protocol adaptation between said primary calculator (2) and said secondary calculators (3), particularly when said communication links (L2) are of a heterogeneous type.

2. Routing system according to claim 1,
**characterized in that** it comprises at least two such transmission assemblies (I1, 12, 13), the primary calculators (2) of which are interconnected through a high rate serial communication link (L1), so that the primary calculator (2) of one of said transmission assemblies (I1, 12, 13) is adapted to observe and control the primary and secondary calculators of the other assembly.

3. Routing system according to one of claims 1 or 2,
**characterized in that** said primary calculator (2) of such a transmission assembly (I1) is also connected through a serial high rate communication link (L1) to testing and analysing means (4) so as be able namely to check out and regulate said primary and secondary calculators (2, 3) of each of the transmission assemblies (I1, 12, 13) of said system (I).

4. Routing system according to one of claims 2 or 3,
**characterized in that** the rate of the high rate serial communication link (L1) is higher than the cumulated rate of said communication links (L2).

5. Routing system according to one of claims 2 to 4,
**characterized in that** said high rate serial communication link (L1) is the Ethernet bus working under the IP protocol.

6. Routing system according to one of claims 1 to 5,
**characterized in that** at least one of said communication ports (6) of said router (5) comprises a DMA (Direct Access Memory) controller in emission and a DMA controller in reception.

7. Routing system according to one of claims 1 to 6,
**characterized in that**, the data being under the form of data messages, each of said communication ports (6) of said router (5) comprises filtering means (13) for the addresses associated with said data messages so that said port transfers, over the communication link (L2) being connected thereto, only the messages having an address being filtered by said filtering means (13).

8. Routing system according to one of claims 1 to 7,
**characterized in that** said communication ports (6) of said router (5) comprise dating means for data crossing said ports.

9. Routing system according to one of claims 1 to 8,
**characterized in that** said logic circuits of the primary calculator (2) of each of the transmission assemblies (II, I2, I3) are programmable logic circuits of FPGA (Field Programmable Gate Array) type.

10. Routing system according to one of claims 1 to 8,
**characterized in that** it works in a real-time data processing environment.
